# EUROPEAN PATENT SPECIFICATION

(11) **EP 4 229 658 B1**
(45) Date of publication and mention of the grant of the patent: **28.01.2026**
(21) Application number: 21712668.9
(22) Date of filing: 24.02.2021
(51) Int. Cl.: G21C 15/257, G21C 5/12, G21C 1/16, G21D 5/02

(54) **HIGH TEMPERATURE HYDRIDE MODERATOR ENABLING COMPACT AND HIGHER POWER DENSITY CORES IN NUCLEAR MICRO-REACTORS**
HOCHTEMPERATUR-HYDRIDMODERATOR MIT KOMPAKTEN UND HÖHEREN LEISTUNGSDICHTEKERNEN IN KERNREAKTOREN
MODÉRATEUR D'HYDRURE À HAUTE TEMPÉRATURE PERMETTANT D'OBTENIR DES COEURS COMPACTS À DENSITÉ DE PUISSANCE SUPÉRIEURE DANS DES MICRO-RÉACTEURS NUCLÉAIRES

(30) Priority: 03.03.2020 US 202062984591 P
(43) Date of publication of application: 23.08.2023
(60) Divisional application: 25192641.6
(73) Proprietor: Westinghouse Electric Company LLC, Cranberry Township, PA 16066 (US)
(72) Inventor: DASARI, Venkateswara Rao, Cranberry Township, Pennsylvania 16066 (US); LEVINSKY, Alex, Pittsburgh, Pennsylvania 15238 (US); ARAFAT, Yasir, Pittsburgh, Pennsylvania 15202 (US); VAN WYK, Jurie J., Cranberry Township, Pennsylvania 16066 (US); BLOOD, Mikaela E., Denver, Colorado 80205 (US)
(74) Representative: Novagraaf Group
(86) International application number: PCT/US2021/019456
(87) International publication number: WO 2021/178182

(56) References cited:
- US-A- 3 449 208
- US-A- 5 428 653
- US-A1- 2019 096 536

## Description

### CROSS-REFERENCE TO RELATED APPLICATIONS

This application claims the benefit of U.S. Provisional Application Serial No. 62/984,591 filed March 3, 2020.

### BACKGROUND

This invention relates generally to micro-reactors, and more particularly, to arrangements of fuel channels, heat pipes, and moderators within the reactor core.

The electricity energy market can be divided into centralized and decentralized. The centralized market is based on large (in the range of hundreds of MWe) power generators and high capacity dense transmission and distribution networks. The decentralized or off-grid market relies instead on compact power generators (<15 MWe) usually connected to small localized distribution networks or micro-grids. Currently, remote artic communities, remote mines, military bases and island communities are examples of decentralized markets. At present, the energy in off-grid markets is predominately provided by diesel generators. This leads to high costs of electricity, fossil fuel dependency, load restrictions, complicated fuel supply logistics and aging infrastructure. The stringent requirements of off-grid markets include affordability, reliability, flexibility, resiliency, sustainability (clean energy), energy security, and rapid installation and minimum maintenance efforts. All these demands can be addressed with nuclear energy.

Micro-reactors are nuclear reactors that are capable of generating less than 10MWe and capable of being deployed for remote application. These micro-reactors can be packaged in relatively small containers, operate without active involvement of personnel, and operate without refueling/replacement for a longer period than conventional nuclear power plants.

One such micro-reactor is the eVinci Micro Reactor system, designed by Westinghouse Electric Company. The eVinci system is a heat pipe cooled reactor power system that utilizes fuel, neutron moderator channels, and heat pipes housed in a compact monolith core block. The heat pipes act as passive heat removal devices that efficiently move thermal energy out of the monolith core to heat exchangers on a secondary side of the micro-reactor. The heat pipes are hermetically sealed tubes that contain a small amount of a volatile liquid (such as liquid potassium or sodium) that are boiled at one end of the tube (an evaporator section) and the vapor travels to the other end of the tube where it condenses (a condenser section), depositing its heat of vaporization. The condensed liquid is returned to the other end of the tube by means of a wick using capillary forces, drawing the condensate back toward the evaporator section. Additional discussion regarding heat pipes are described in U.S. Patent Application No. 14/773,405, titled "MOBILE HEAT PIPE COOLED FAST REACTOR SYSTEM, which published as U.S. Patent Application Publication No. 2016/0027536, and U.S. Patent No. 3,668,070, titled "NUCLEAR REACTOR WITH HEAT PIPES FOR HEAT EXTRACTION".

U.S. Patent Application Publication No. 2019/096536 discloses a nuclear reactor design to enable automated or semi-automated manufacturing of a small reactor in a mechanized factory, using a layered approach to combine simple "plate" geometries with the use of diffusion bonding and computer aided manufacturing techniques that integrate all the fuel, axial reflectors, axial gamma and neutron shields, fuel gas plenum, heat removal mechanism, primary heat exchangers and moderator all in one block or component.

US. Patent No. 5 428 653 discloses a bimodal nuclear power and propulsion system for space. Closed cycle heat engines are in operative association with each sector of a sectored reactor core. Heat exchangers employing waste heat, electric power and reactor heat are used to heat propellant to increase specific impulse. U.S. Patent No. 3449208 discloses a small nuclear reactor comprising a core including an assembly of a members, each member consisting essentially of a solid metal hydride moderator matrix and a fissionable material, and each being enclosed with a relatively hydrogen-impermeable lining, a liquid metal coolant, coolant channels defined by the members and passing through the core, and reflector means surrounding the core.

Current cores in micro-reactors utilize uranium fuel that needs to be enriched to levels much greater than 5 weight% U-235. One such fuel is High Assay Low Enriched Uranium (HALEU), which is uranium fuel enriched up to 19.75 weight% U-235. The industrial scale amount of uranium enriched to more than 5 weight% U-235 is limited due to the absence of the manufacturing capabilities of the needed scale. This makes the nuclear fuel cost high and, as a result, leads to high micro-reactor costs. Consequently, this limits accessibility of the micro-reactors to potential markets and customers.

One such objective of the present disclose is to provide a light-weight nuclear micro-reactor that is inherently safe, capable of operation for several years without replacement, usable with a reduced amount of HALEU fuel or usable with fuel with enrichment as low as 5 weight% U-235, and can be transported by airplane, truck and conventional roads by meeting strict limits in mass and size.

### SUMMARY

The invention provides a reactor core including a monolithic core housing, a plurality of reactor core blocks extending radially from a center of the monolithic core housing and, wherein the plurality of reactor core blocks are housed in the monolithic core housing. Each reactor core block includes a fuel channel, a heat pipe, a primary moderator matrix encompassing the fuel channel and the heat pipe, and a secondary moderator channel configured to at least partially surround the fuel channel, the heat pipe, and the primary moderator matrix. The secondary moderator channel is comprised of metal hydride. Various embodiments are defined in appended claims 2 to 7.

The invention also provides a reactor core is disclosed including a first arrangement extending around a center of the reactor core, a second arrangement, and a third arrangement positioned between the first arrangement and the second arrangement. The first arrangement includes a first plurality of fuel channels and a first plurality of heat pipes. The first arrangement is configured to alternate between a fuel channel from the first plurality of fuel channels and a heat pipe from the first plurality of heat pipes. The second arrangement includes a second plurality of fuel channels and a second plurality of heat pipes. The second arrangement is configured to alternate between a fuel channel from the second plurality of fuel channels and a heat pipe from the second plurality of heat pipes. The third arrangement includes a first plurality of moderator channels. Each moderator channel from the first plurality of moderator channels is comprised of metal hydride. The reactor core further includes a moderator matrix. The first arrangement, the second arrangement, and the third arrangement are embedded in the moderator matrix. The reactor core comprises a monolithic core housing, wherein the first arrangement, the second arrangement, and the third arrangement extend outwardly from the center of the reactor core to the monolithic core housing.

Various embodiments are defined in appended claims 9 to 14.

### BRIEF DESCRIPTION OF THE DRAWINGS

Various features of the embodiments described herein, together with advantages thereof, may be understood in accordance with the following description taken in conjunction with the accompanying drawings as follows:
FIG. 1 illustrates a reactor core block, according to at least one aspect of the present disclosure.
FIG. 2 illustrates a reactor core, according to at least one aspect of the present disclosure.
FIG. 3 illustrates a reactor core, according to at least one aspect of the present disclosure.
FIG. 4 illustrates a reactor core, according to at least one aspect of the present disclosure.
FIG. 5 illustrates a reactor core, according to at least one aspect of the present disclosure.
FIG. 6 illustrates a reactor core, according to at least one aspect of the present disclosure.
FIG. 7 illustrates a reactor core, according to at least one aspect of the present disclosure.

Corresponding reference characters indicate corresponding parts throughout the several views. The exemplifications set out herein illustrate various embodiments of the invention, in one form, and such exemplifications are not to be construed as limiting the scope of the invention in any manner.

### DETAILED DESCRIPTION

Numerous specific details are set forth to provide a thorough understanding of the overall structure, function, manufacture, and use of the embodiments as described in the specification and illustrated in the accompanying drawings. Well-known operations, components, and elements have not been described in detail so as not to obscure the embodiments described in the specification. The reader will understand that the embodiments described and illustrated herein are non-limiting examples, and thus it can be appreciated that the specific structural and functional details disclosed herein may be representative and illustrative. Variations and changes thereto may be made without departing from the scope of the claims.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system that "comprises," "has," "includes" or "contains" one or more elements possesses those one or more elements, but is not limited to possessing only those one or more elements. Likewise, an element of a system, device, or apparatus that "comprises," "lias," "includes" or "contains" one or more features possesses those one or more features, but is not limited to possessing only those one or more features.

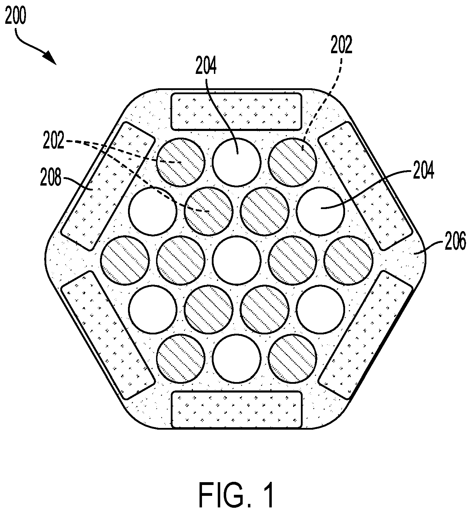

FIG. 1 illustrates a reactor core block 200 according to at least one aspect of the present disclosure. The reactor core block 200 includes a plurality of fuel sources, or channels, 202 and a plurality of heat pipes 204 The heat pipes 204, as described above, are configured to move heat produced by the fuel channels 202 out of the reactor core block 200 to the secondary side of the reactor, which can include heat exchanges for extracting heat from the heat pipes 204.

As illustrated in FIG. 1, the fuel channels 202 and the heat pipes 204 can arranged in a hexagonal pattern. In other embodiments, the fuel channels 202 and the heat pipes 204 can be arranged in other patterns, such as a square pattern, an octagon pattern, a decagon pattern, or any other pattern that results in a shape with an even number of sides. In other embodiments, the fuel channels 202 and the heat pipes 204 can be arranged in other patterns where the resultant shape does not have an even number of sides, such as a triangular pattern, a pentagon pattern, or a heptagon pattern, as examples. Other embodiments are envisioned where the fuel channels 202 and the heat pipes 204 have an asymmetrical pattern within the reactor core block 200.

As shown in in FIG. 1, the reactor core block 200 can include twelve fuel channels 202 and seven heat pipes 204. Stated another way, the reactor core block 200 can include more fuel cells 202 than heat pipes 204. In one embodiment, there are two fuel channels 202 for every one heat pipe 204. In another embodiment there are more than two fuel channels 202 for every one heat pipe 204. In another embodiment, there is a 1:1 ratio of the number of fuel channels 202 and heat pipes 204. Other embodiments are envisioned where there are more heat pipes 204 than fuel channels 202. In one aspect, the number of fuel channels 202 adjacent to a heat pipe 204 is variable. As shown in FIG. 1, the heat pipe 204 in the center of the reactor core block 200 is adjacent six fuel channels 202, while heat pipes 204 along the outer periphery of the reactor core block 200 are adjacent only four fuel channels 202. Other embodiments are envisioned where the number of heat pipes 202 adjacent the fuel channels 202 is the same throughout the reactor core block 200.

The reactor core block 200 further includes a primary moderator matrix 206 configured to encompass and securely hold the fuel channels 202 and the heat pipes 204 within the reactor code block 200. In one embodiment, the primary moderator matrix 206 comprises a solid block material having low neutron absorbing properties and, preferably, having a small moderation effect. In one such embodiment, the primary moderator matrix can comprise graphite. In another embodiment, the primary moderator matrix can comprise silicon carbide. In another embodiment, the primary moderator matrix can comprise aluminum nitride. In another embodiment, the primary moderator matrix can comprise stainless steel. In another embodiment, the primary moderator matrix can comprise combinations of any graphite, silicon carbide, aluminum nitride, and stainless steel, as examples.

The reactor core block 200 can further include a plurality of secondary moderator channels 208. As shown in FIG. 1, the plurality of secondary moderator channels can partially surround the fuel cells 202 and the heat pipes 204 within the primary moderator matrix 206. In another embodiment, the plurality of secondary moderator channels 208 can completely surround the fuel cells 202 and the heat pipes 204. In one embodiment, the reactor core block 200 only includes one, continuous secondary moderator channel that is configured to completely surround the fuel cells 202 and the heat pipes 204. As shown in FIG. 1, the secondary moderator channels 208 can comprise a puck cross-sectional shape. While the secondary moderator channels 208 are shown with a puck cross-sectional shape, other cross-sectional shapes are envisioned, such as square cross-sectional shapes, hexagon cross-sectional shapes, or any other cross-sectional shapes such that the secondary moderator channels 208 either partially or completely surround the primary moderator matrix 206, the fuel channels 202, and the heat pipes 204.

As shown in FIG. 1, the secondary moderator channels 208 are configured to overlap the primary moderator matrix 206 such that the secondary moderator channels 208 only surrounds a portion of the primary moderator matrix 206, while portions of the primary moderator matrix 206 are unsurrounded by the secondary moderator channels 208. In one embodiment, the reactor core block 200 only includes one, continuous secondary moderator that is configured to completely surround the fuel channels 202, the heat pipes 204, and the primary moderator matrix 206.

The secondary moderator channels 208 comprise hydrogen atoms in a chemical form that do not dissociate at the high operating temperature within the reactor. According to the invention, this is achieved by using high temperature metal hydride. In one embodiment, the metal hydride can comprise metal hydride blocks. In one embodiment, the metal hydride can comprise metal hydride pellets. In one embodiment, the metal hydride can comprise metal hydride rods. In one embodiment, the metal hydride can comprise metal hydride plates. In one embodiment, the metal hydride can comprise combinations of any of metal hydride blocks, pellets, rods, or plates.

In one embodiment, the secondary moderator channels 208 can comprise yttrium hydride. In one embodiment, the secondary moderator channels 208 can comprise cerium hydride. In one embodiment, the secondary moderator channels 208 can comprise yttrium zirconium hydride. In one embodiment, the secondary moderator channels 208 can comprise combinations of any of yttrium hydride, cerium hydride, yttrium zirconium hydride.

The advantage of the high temperature metal hydride moderators, such as the secondary moderator channels 208, is that the metallic lattice can dissolve hydrogen in its lattice and retain a high concentration of hydrogen within its structure. A high concentration of hydrogen will ensure neutron moderation. At the same time, high temperature operation is possible due to the retention of hydrogen in the hydride without significant dissociation into hydrogen gas, unlike water, organic compounds or hydrogen gas at higher temperatures. The high temperature hydride moderators also provide a passive method to shutdown the reactor by dissociating hydrogen and removing hydrogen from the core. At a certain temperature, which is higher than the operating temperature (greater than 600°C) and can be defined by choosing a proper moderator and its stochiometric number, the hydrogen atoms will dissociate and be released from the secondary moderators 208. As a result, neutron moderation will be lost, and the reactor will be passively shutdown.

In addition, the arrangement and the combined use of the secondary moderator channels 208 with the primary moderator matrix 206 allows for a reduction in the amount of fuel that is needed to operate the reactor. A high temperature moderator, such as yttrium hydride, cerium hydride, zirconium hydride or a combination of these, together with a low absorbing structure material, such as graphite, has never been used in any commercial or experimental nuclear micro-reactors. In one embodiment, the arrangement and combination of the primary moderator matrix 206 and the secondary moderator channels 208 allows for a reduction of the amount of HALEU fuel that is needed to operate the reactor. In other embodiments, the arrangement and combination of the primary moderator matrix 206 and the secondary moderator channels 208 allows the use of a fuel with a lower enrichment of U-235 than HALEU, such as fuel enriched up to 5 weight% U-235 (Low Enriched Uranium), which is more readily available than HALEU.

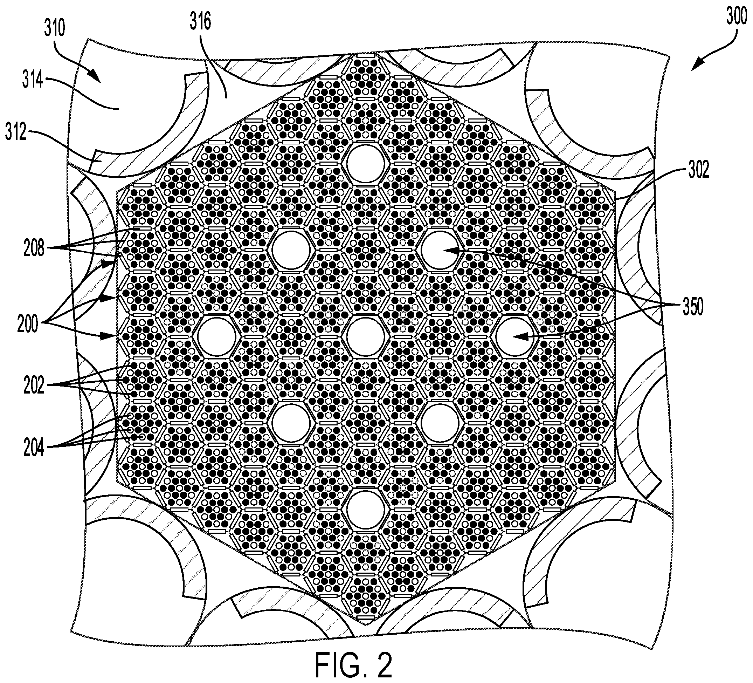

In addition, the arrangement of the fuel channels, heat pipes, primary moderators, and secondary moderator channels, discussed in more detail below in reference to FIGS. 2-7, provides an even bigger fuel mass reduction and ensures inherent safety of the reactor. The combination of the secondary moderator channels 208 with the primary moderator matrix 206, along with a particular arrangement of fuel channels, heat pipes, primary moderator matrix, and secondary moderator channels, enables the use of other types of low density fuel sources, such as Tri-structural Isotropic (TRISO) fuel or fuel types such as U3Si2 fuel enriched to 5 weight%, as examples. The above-described combination and arrangement of the primary and secondary moderators ensures the negative reactivity coefficients and maintains the proper time delays between the reactivity feedbacks in the different core components, thus enhancing micro-reactor safety. In addition, the above described features will allow micro-reactors to operate for longer than was previously capable, improves fuel economics by an order of magnitude, and improves reactor levelized cost of electricity (LCOE) by at least 50%.

Referring now to FIG. 2, a reactor core 300 in accordance with at least one aspect of the present disclosure is illustrated. The reactor core 300 contains a plurality of the reactor core blocks 200 repeated radially within the reactor core 300. The reactor core blocks 200 are housed within a monolithic core housing 302, which can be made of a suitable creep-resistant, high temperature material, such as stainless steel, as an example. The monolithic core housing 302 serves as a fission product barrier and as a thermal medium between the fuel channels 202 and the heat pipes 204.

The heat pipes 204 are configured to extend out of the reactor core 300 to a secondary side of the reactor such that heat produced by the fuel channels 202 can be absorbed by heat exchangers. As discussed above, the heat pipes 204 can include an evaporator section and a condenser section. The evaporator section of the heat pipes 204 can be placed within reactor core 300 and the condenser section can be placed in a secondary side of the reactor where the heat is configured to be extracted. Heat produced by the fuel channels 202 are absorbed by the evaporator sections of the heat pipes 204, which causes the working fluid of the heat pipe 204 to be vaporized. The vaporized fluid travels to the condenser section, releasing its latent heat to the heat exchangers. The working fluid is then returned to the evaporator section (and the reactor core 300) by way of capillary action of a wick structure within the heat pipe 204.

The monolithic core housing 302 of the reactor core 300 can be surrounded by a plurality of control drums 310, which include a neutron absorber section 312 and a neutron reflector section 314. The control drums 310 are configured to rotate between a first position and a second position. In the first position, the neutron absorber sections 312 of the control drums 310 can be configured to face the monolithic core housing 302, limiting or stopping reactivity within the reactor core 300. In the second position, the neutron reflector sections 314 of the control drums 310 can be configured to face the monolithic core housing 302, thus increasing reactivity of the reactor core 300 via the Doppler effect.

In one aspect, the control drums 310 can be the only moving component within the reactor core 300. In one embodiment, all of the control drums 310 are configured to rotate together such that all of control drums 310 are either in the first position or the second position. In other embodiments, the control drums 310 can be independently rotatable relative to each other. In other embodiments, the control drums 310 can be rotated to a partially rotated position where a portion of both the neutron absorber section 312 and neutron reflector section 314 are facing the monolithic core housing 302. In another embodiment, the control drums 310 are configured to automatically rotate between the first position and the second position depending on various factors, such as the temperature within the reactor core 300. In one aspect, when the temperature within the reactor core 300 meets or exceeds a threshold temperature, the control drums 310 can be configured to automatically rotate to the first position, where the neutron absorber sections 312 are facing the monolithic core housing 302, limiting or stopping reactivity of the reactor core 300. In another aspect, when the temperature within the reactor core 300 drops below a threshold temperature, the control drums 310 can be configured to automatically rotate to the second position, where the neutron reflector sections 314 are facing the monolithic core housing 302, thus, increasing reactivity of the reactor core 300 via the Doppler effect. In one aspect, spaces 316 between the control drums 310 can additionally be comprised of neutron reflectors to enhance reactivity. In another embodiment, the spaces 316 can be comprised of neutron absorbers to limit reactivity. In another embodiment, the spaces 316 can be a mixture of neutron absorbers and neutron reflectors.

The reactor core 300 and the control drums 310 can be housed within a containment vessel (not shown), which can be comprised of any suitable material configured to house the reactor core 300 and control drums 310. In one aspect, the containment vessel can be comprised of stainless steel, as an example. The containment vessel can be surrounded by addition neutron absorbers, a boron carbide neutron shield, an air gap for shield cooling, a gamma shield, and a stainless steel outer wall.

As discussed above, at a certain temperature, which is higher than the operating temperature and can be defined by choosing a proper moderator and its stochiometric number, the hydrogen atoms will dissociate and be released from the secondary moderator channels 208. As a result, neutron moderation will be lost, and the reactor core 300 will be passively shutdown. Referring again to FIG. 2, the reactor core 300 can also include reactor shutdown modules 350. The reactor shutdown modules 350 provide a secondary passive shutdown system for shutting down the reactor core 300 along with the passive shutdown provided from the secondary moderators 208. In one aspect, neutron absorbing materials can be designed to be inserted into the shutdown modules 350 at a certain reactor core 300 temperature when compared to a predetermined threshold value.

As discussed above, the arrangement provided in the reactor core 300 allows for a reduction of the amount of HALEU fuel that is needed to operate the reactor. In addition, the arrangement allows the use of other types of fuel other than HALEU, such as fuel enriched up to 5 weight% U-235 (Low Enriched Uranium), Tri-structural Isotropic (TRISO) fuel, or U3Si2 fuel enriched to 5 weight%, as examples. As one example, HALEU TRISO would require 2000-4000 kg of TRISO fuel at 20% enriched with U-235 at 40% packing ratio to achieve criticality. When metal hydrides, such as yttrium hydride, is used, total fuel mass can be reduced to ~600 kg of TRISO fuel at 19.75% enriched with U-2335 at 40% packing ratio. The arrangement of FIG. 2 ensures the negative reactivity coefficients and maintains the proper time delays between the reactivity feedbacks in the different core components, thus enhancing micro-reactor safety. In addition, the arrangement in FIG. 2 allows the reactor core 300 to operate for longer than was previously capable, improves fuel economics by an order of magnitude, and improves reactor levelized cost of electricity (LCOE) by at least 50%.

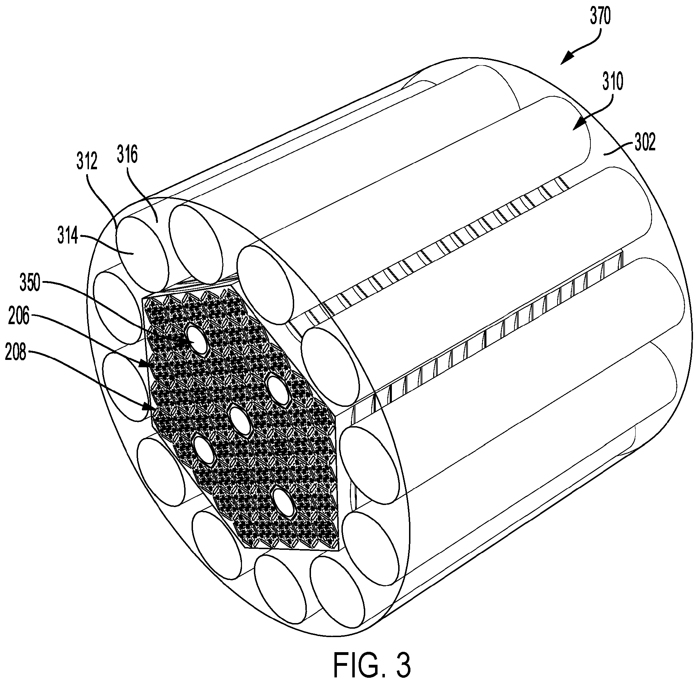

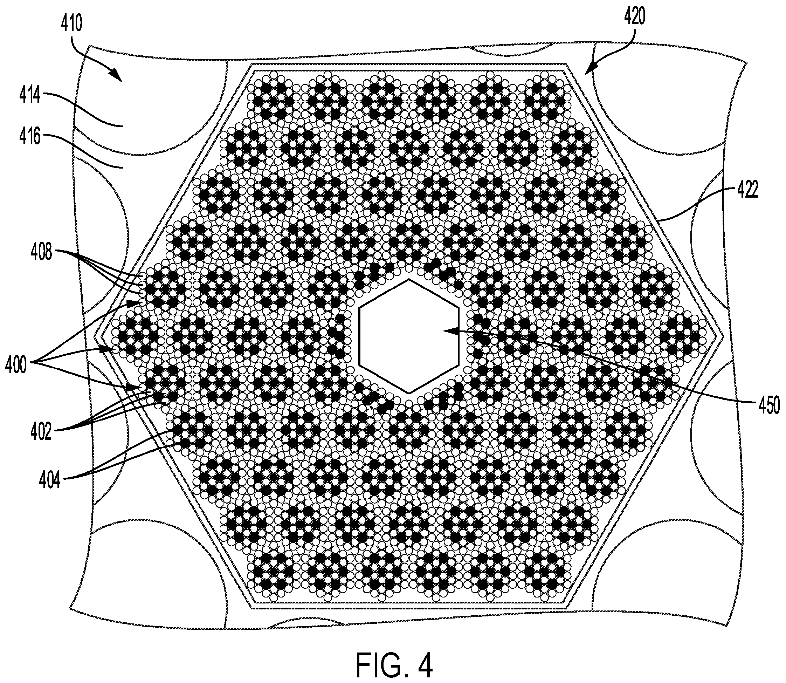

Referring now to FIG. 3, another embodiment of a reactor core 370 is illustrated, in accordance with at least one aspect of the present disclosure. Reactor core 370 is similar to reactor core 300 and like numbers are used to illustrate similar components. Unlike reactor core 300, reactor core 370 includes five reactor shutdown modules 350 (whereas reactor core 300 includes nine reactor shutdown modules 350) and reactor core 370 does not include fuel channels 202 and heat pipes 404 inserted therein. As can be seen in FIG. 4, the control drums 3 10, the primary moderator matrix 206, and the secondary moderator channels 208 extend completely along the length of the reactor core 370.

Referring now to FIG. 4, another embodiment of a reactor core 420 is illustrated in accordance with at least one aspect of the present disclosure. The reactor core 420, like the reactor core 300, includes a plurality of reactor core blocks 400 that comprise fuel channels 402, heat pipes 404, a primary moderator matrix (now shown), and secondary moderator channels 408. As shown in FIG. 4, the secondary moderator channels 408 include a circular cross-sectional shape. In addition, the secondary moderator channels 408 are configured such that the reactor core blocks 400 are completely surrounded by secondary moderator channels 408. In other embodiments, the secondary moderator channels are configured such that the reactor core blocks 400 are only partially surrounded by the secondary moderators 400. While the secondary moderator channels 408 are shown with a circular cross-sectional shape, other cross-sectional shapes are envisioned, such as square cross-sectional shapes, hexagon cross-sectional shapes, or any other cross-sectional shapes such that the reactor core blocks 400 are completely surrounded by the secondary moderator channels 408.

Similar to the reactor core 300, the reactor core blocks 400 are housed within a monolithic core housing 422. The monolithic core housing 422 can also be surrounded by a plurality of control drums 410, which include a neutron absorber section (now shown) and a neutron reflector section 414, along with spaces 416 positioned between the control drums 410. Unlike the reactor core 300, the reactor core 420 includes a single reactor shutdown module 450, which provides a secondary passive shutdown system for shutting down the reactor core 420 along with the passive shutdown provided from the secondary moderators 408. While only one reactor shutdown module 450 is illustrated, other embodiments are envisioned where the reactor core 420 includes a plurality of reactor shutdown modules 450.

The arrangement provided in the reactor core 420 allows for a reduction of the amount of HALEU fuel that is needed to operate the reactor. In addition, the arrangement allows the use of other types of fuel other than HALEU, such as fuel enriched up to 5 weight% U-235 (Low Enriched Uranium), Tri-structural Isotropic (TRISO) fuel, or U3Si2 fuel enriched to 5 weight%, as examples. The arrangement of FIG. 4 ensures the negative reactivity coefficients and maintains the proper time delays between the reactivity feedbacks in the different core components, thus enhancing micro-reactor safety. In addition, the arrangement in FIG. 4 allows the reactor core 420 to operate for longer than was previously capable, improves fuel economics by an order of magnitude, and improves reactor levelized cost of electricity (LCOE) by at least 50%.

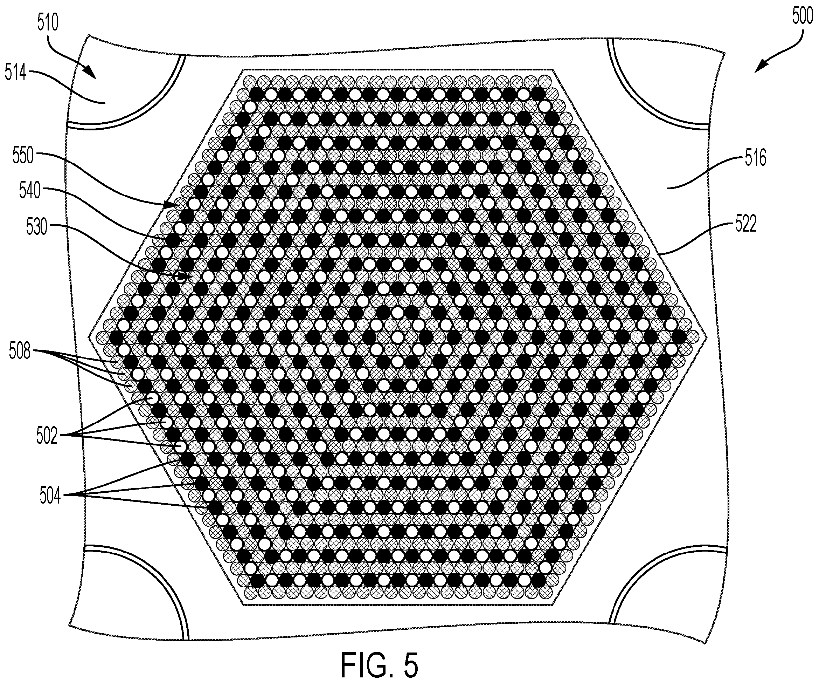

Referring now to FIG. 5, another embodiment of a reactor core 500 is illustrated in accordance with at least one aspect of the present disclosure. The reactor core 500 contains a plurality of continuous, circular arrangements, 530, 540, 550 extending outwardly from the center of the reactor core 500 to a monolithic core housing 522. As shown in FIG. 5, the reactor core 500 includes can include a first arrangement 530 that includes alternating fuel channels 502 and heat pipes 504 along the length thereof. The reactor core 500 can also include a second arrangement 540 that includes a plurality of moderator channels 508 surrounding, or encompassing, the first row 530. The moderator channels can be similar to the high temperature metal hydride moderators, such as the secondary moderators 208, discussed above. In addition, the reactor core 500 can include a third arrangement 550, similar to the first arrangement 530, surrounding, or encompassing, the second arrangement 540 that, like the first row 530, includes alternating fuel channels 502 and heat pipes 504 along the length thereof. In one aspect, the second arrangement 540 of moderator channels 508 is configured to be positioned between the first arrangement 530 from the third arrangement 550 such as to completely separate the first arrangement 530 from the third arrangement 550. In other aspects, gaps can be defined between the moderator channels 508 of the second arrangement 540 such that the first arrangement 530 and the second arrangement 550 are only partially separated by the second arrangement 540. The reactor core 500 can include any number of arrangements between the center of the reactor core 500 until the rows reach the monolithic core housing 522 of the reactor core 500.

The above-described reactor core 500 is advantageous from a manufacturing point of view, while simultaneously providing the above-described fuel benefits (less amount of HALEU, ability to use other types of fuel, enhancing reactor safety, as examples). In addition, while not shown in FIG. 5, the reactor core 500 can include primary moderators, or a primary moderator matrix similar to primary moderator matrix 206, therein, configured to securely hold the fuel channels 502 and the heat pipes 504 and provide low neutron absorbing and, preferably, have a small moderation effect. As discussed above, the primary moderator can comprise any of graphite, silicon carbide, aluminum nitride, stainless steel, and combinations thereof.

Similar to the above-described reactor cores 300, 420, the rows 530, 540, 550 are housed within a monolithic core housing 522. The monolithic core housing 522 can also be surrounded by a plurality of control drums 510, which include a neutron absorber section (not shown) and a neutron reflector section 514, along with spaces 516 positioned between the control drums 510. While not illustrated, the reactor core 500 can include any number of reactor shutdown modules to provide a secondary passive shutdown system for shutting down the reactor core 500 along with the passive shutdown provided from the secondary moderators 508.

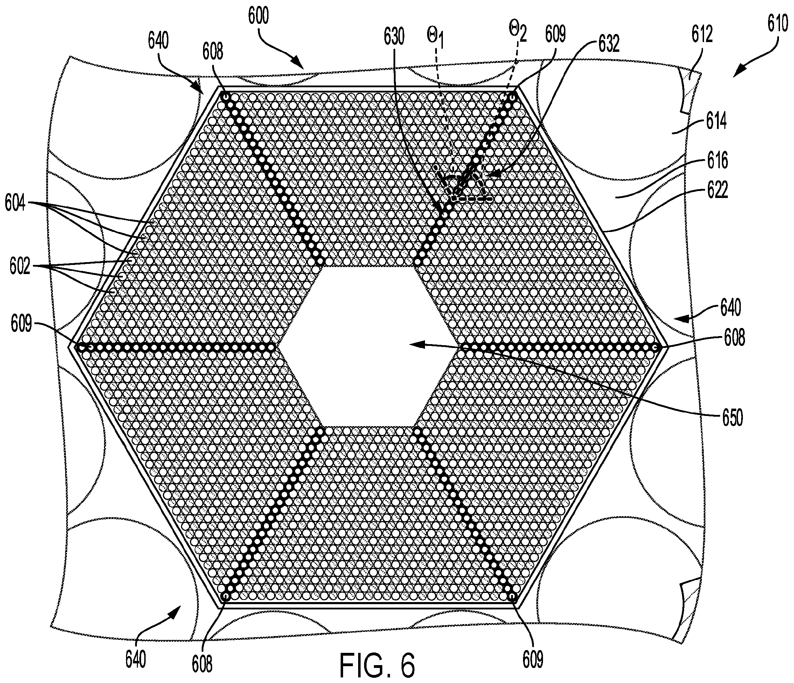

Referring now to FIG. 6, another embodiment of a reactor core 600 is illustrated in accordance with at least one aspect of the present disclosure. The reactor core 600 contains discrete core sections 640 each including rows of fuel channels 602 and heat pipes 604, which are separated by moderator channels 608, 609. The moderator channels 608, 609 can be similar to the high temperature metal hydride moderators, such as the secondary moderators 208, discussed above.

The rows of fuel channels 602, heat pipes 604, and moderators 608 of one reactor section 640 can be angled relative to the rows of fuel channels 602, heat pipes 604, and moderators 608 of an adjacent reactor section 604. In one example, referring to FIG. 6, the rows of fuel channels 602, heat pipes 604, and moderator channels 608 of one reactor section 640 are configured to interface 630 with the rows of moderator channels 609 to define a first angle therebetween Θ₁. In addition, the rows of fuel channels 602, heat pipes 604, and moderator channels 608 of another reactor section 640 are configured to interface 632 with the rows of moderator channels 609 to define a second angle therebetween Θ₂. Stated another way, the angle of the rows of fuel channels 602, heat pipes 604, and moderators 608 are configured to transition from the first angle Θ₁ to the second angle Θ₂ at the row of the moderator channels 609. Stated another way, the rows of fuel channels 602, heat pipes 604, and moderator channels 608 of one reactor section 640 are angled relative to the rows of fuel channels 602, heat pipes 604, and moderator channels 608 of another reactor section 640. In one embodiment, Θ₁ and Θ₂ can be equal. In one embodiment, Θ₁ and Θ₂ can be different. In one embodiment, the sum of Θ₁ and Θ₂ can define 90°. In other embodiments, the sum of Θ₁ and Θ₂ can be greater or less than 90° The above-described arrangement is advantageous from a manufacturing point of view, while simultaneously providing the above-described fuel benefits (less amount of HALEU, or ability to use other types of fuel, enhanced safety, as examples). In addition, while not shown in FIG. 6, the reactor core 600 includes primary moderators, or a primary moderator matrix similar to primary moderator matrix 206, therein, configured to securely hold the fuel channels 602 and the heat pipes 604 and provide low neutron absorbing and, preferably, have a small moderation effect. As discussed above, the primary moderator matrix can comprise any of graphite, silicon carbide, aluminum nitride, stainless steel, and combinations thereof.

Similar to the above described reactor cores 300, 420, 500, the reactor core 600 includes a monolithic core housing 622 surrounding the fuel channels, 602, heat pipes 604, the secondary moderators 608, and other components of the reactor core 600. The monolithic core housing 622 can also be surrounded by a plurality of control drums 610, which include a neutron absorber section 612 and a neutron reflector section 614, along with spaces 616 positioned between the control drums 610. In addition, the reactor core 600 can include a reactor shutdown module 650 to provide a secondary passive shutdown system for shutting down the reactor core 600 along with the passive shutdown provided from the secondary moderators 608. While only one reactor shutdown module 650 is illustrated, it is envisioned that the reactor core 600 can include a plurality of reactor shutdown modules 650

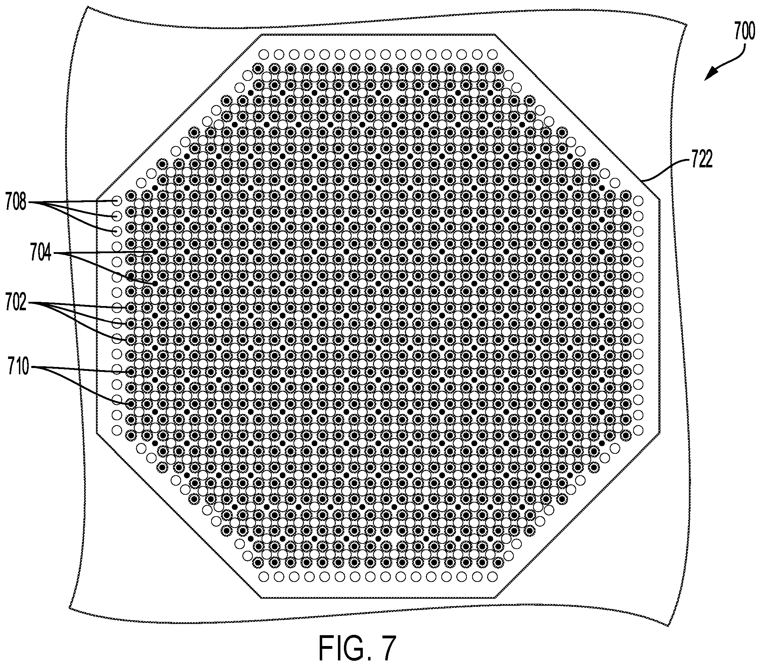

Referring now to FIG. 7, another embodiment of a reactor core 700 is illustrated in accordance with at least one aspect of the present disclosure. The reactor core 700 contains an array of annular fuel channels 702 and an array of moderator channels 708. The secondary moderator channels can be similar to the high temperature metal hydride moderators, such as the secondary moderators 208, discussed above. In addition, the reactor core contains a plurality of heat pipes 704, 710. Heat pipes 704 can be positioned in gaps between the fuel channels 702, while heat pipes 710 can be positioned in the center of the fuel channels 702. The mesh type configuration illustrated in FIG. 7 allows for an increase in the number of heat pipes 704, 710 per reactor, and as a result, leads to an increase in the amount of power output provided by the reactor core 700. In addition, while not shown in FIG. 7, the reactor core 700 includes primary moderators, or a primary moderator matrix similar to primary moderator matrix 206 discussed above, therein, configured to securely hold the fuel cells 702 and the heat pipes 704, 710 and provide low neutron absorbing and, preferably, have a small moderation effect. As discussed above, the primary moderators can comprise any of graphite, silicon carbide, aluminum nitride, stainless steel, and combinations thereof.

Similar to the above described reactor cores 300, 420, 500, 600, the reactor core 700 can includes a monolithic core housing 722 surrounding the fuel channels, 702, heat pipes 704, 710, the secondary moderators 708, and other components of the reactor core 700. While not illustrated, the monolithic core housing 722 can also be surrounded by a plurality of control drums, which include a neutron absorber section and a neutron reflector section, along with spaces positioned between the control drums. In addition, the reactor core 700 can include any number of reactor shutdown modules to provide a secondary passive shutdown system for shutting down the reactor core 700 along with the passive shutdown provided from the secondary moderators 708.

In addition to the above-discussed fuel and safety benefits, the arrangements within the reactor cores enable the packaging of a relatively small core into a container that has low mass that can be transported within standard available transport systems (e.g. standard ISO shipping containers), and as a result, can be transported by airplane, truck and conventional roads by meeting strict limits in mass and size.

Unless specifically stated otherwise as apparent from the foregoing disclosure, it is appreciated that, throughout the foregoing disclosure, discussions using terms such as "processing," "computing," "calculating," "determining," "displaying," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

One or more components may be referred to herein as "configured to," "configurable to," "operable/operative to," "adapted/adaptable," "able to," "conformable/conformed to," etc. Those skilled in the art will recognize that "configured to" can generally encompass active-state components and/or inactive-state components and/or standby-state components, unless context requires otherwise.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flow diagrams are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures or characteristics may be combined in any suitable manner in one or more aspects.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system that "comprises," "has," "includes" or "contains" one or more elements possesses those one or more elements, but is not limited to possessing only those one or more elements. Likewise, an element of a system, device, or apparatus that "comprises," "has," "includes" or "contains" one or more features possesses those one or more features, but is not limited to possessing only those one or more features.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. It is intended that the claims submitted herewith define the overall scope.

## Claims

1. A reactor core (300), comprising:
a monolithic core housing (302);
a plurality of reactor core blocks (200), wherein each reactor core block (200) comprises:
a fuel channel (202);
a heat pipe (204);
a primary moderator matrix (206) encompassing the fuel channel and the heat pipe; and
a secondary moderator channel (208) configured to at least partially surround the fuel channel (202), the heat pipe (204), and the primary moderator matrix (206), wherein the secondary moderator channel (208) is comprised of metal hydride;
**characterized in that**
the plurality of reactor core blocks (200) extend radially from a center of the monolithic core housing (302) and,
the plurality of reactor core blocks (200) are housed within the monolithic core housing (302).

2. The reactor core (300) of Claim 1, further comprising a control drum (310) comprising a neutron reflector (314) and a neutron absorber (312).

3. The reactor core (300) of Claim 2, wherein the control drum (310) is rotatable between a first position and a second position, wherein in the first position, the neutron absorber (312) is facing the plurality of reactor core blocks (200), and wherein in the second position, the neutron reflector (314) is facing the plurality of reactor core blocks (200).

4. The reactor core (300) of any one of Claims 1 to 3, wherein the primary moderator matrix (206) is selected from the group consisting of graphite, silicon carbide, aluminum nitride, stainless steel, and combinations thereof.

5. The reactor core (300) of any one of Claims 1 to 4, wherein the metal hydride is selected from the group consisting of yttrium hydride, cerium hydride, zirconium hydride, and combinations thereof.

6. The reactor core (300) of any one of Claims 1 to 5, wherein the secondary moderator channel (208) is selected from the group consisting of blocks, pellets, rods, or plates, and combinations thereof.

7. The reactor core (300) of any one of Claims 1 to 6, wherein the secondary moderator channel (208) is configured to completely surround the fuel channel (202), the heat pipe (204), and the primary moderator matrix (206).

8. A reactor core (500) , comprising:
a first arrangement (530), comprising:
a first plurality of fuel channels (502); and
a first plurality of heat pipes (504), wherein the first arrangement (530) is configured to alternate between a fuel channel (502) from the first plurality of fuel channels and a heat pipe (504) from the first plurality of heat pipes;
a second arrangement (550), comprising:
a second plurality of fuel channels (502); and
a second plurality of heat pipes (504), wherein the second arrangement (550) is configured to alternate between a fuel channel (502) from the second plurality of fuel channels and a heat pipe (504) from the second plurality of heat pipes;
a third arrangement (540) positioned between the first arrangement and the second arrangement, wherein the third arrangement comprises a first plurality of moderator channels (508), wherein each moderator channel (508) from the first plurality of moderator channels is comprised of metal hydride; and
a moderator matrix (206), wherein the first arrangement (530), the second arrangement (550), and the third arrangement (540) are embedded in the moderator matrix (206);
**characterized in that**
the first arrangement (530) extends around a center of the reactor core (500), wherein the reactor core (500) further comprises a monolithic core housing (522), and wherein the first arrangement (530), the second arrangement (550), and the third arrangement (540) extend outwardly from the center of the reactor core (500) to the monolithic core housing (522).

9. The reactor core (500) of Claim 8, further comprising a fourth arrangement comprising a second plurality of moderator channels (508).

10. The reactor core (500) of either Claim 8 or 9, further comprising a control drum (510) comprising a neutron reflector (514) and a neutron absorber.

11. The reactor core (500) of Claim 10, wherein the control drum (510) is rotatable between a first position and a second position, wherein in the first position, the neutron absorber is facing the first arrangement (530), the second arrangement (550), and the third arrangement (540), and wherein in the second position, the neutron reflector (514) is facing the first arrangement (530), the second arrangement (550), and the third arrangement (540).

12. The reactor core (500) of any one of Claims 8 to 11, wherein the metal hydride is selected from the group consisting of yttrium hydride, cerium hydride, zirconium hydride, and combinations thereof.

13. The reactor core (500) of any one of Claims 8 to 12, wherein the first plurality of moderator channels (508) are selected from the group consisting of blocks, pellets, rods, or plates, and combinations thereof.

14. The reactor core (500) of any one of Claims 8 to 13, wherein the moderator matrix (206) is selected from the group consisting of graphite, silicon carbide, aluminum nitride, stainless steel, and combinations thereof.

## Patentansprüche

1. Reaktorkern (300), umfassend:
ein monolithisches Kerngehäuse (302);
eine Vielzahl von Reaktorkernblöcken (200), wobei jeder Reaktorkernblock (200) umfasst:
einen Brennstoffkanal (202);
ein Wärmerohr (204);
eine primäre Moderatormatrix (206), die den Brennstoffkanal und das Wärmerohr umschließt; und
einen sekundären Moderatorkanal (208), der konfiguriert ist, um den Brennstoffkanal (202), das Wärmerohr (204) und die primäre Moderatormatrix (206) mindestens teilweise zu umgeben, wobei der sekundäre Moderatorkanal (208) aus Metallhydrid besteht;
**dadurch gekennzeichnet, dass**
sich die Vielzahl von Reaktorkernblöcken (200) radial von einer Mitte des monolithischen Kerngehäuses (302) erstreckt, und
die Vielzahl von Reaktorkernblöcken (200) innerhalb des monolithischen Kerngehäuses (302) untergebracht ist.

2. Reaktorkern (300) nach Anspruch 1, ferner umfassend eine Steuertrommel (310), umfassend einen Neutronenreflektor (314) und einen Neutronenabsorber (312).

3. Reaktorkern (300) nach Anspruch 2, wobei die Steuertrommel (310) zwischen einer ersten Position und einer zweiten Position drehbar ist, wobei in der ersten Position der Neutronenabsorber (312) der Vielzahl von Reaktorkernblöcken (200) zugewandt ist und wobei in der zweiten Position der Neutronenreflektor (314) der Vielzahl von Reaktorkernblöcken (200) zugewandt ist.

4. Reaktorkern (300) nach einem der Ansprüche 1 bis 3, wobei die primäre Moderatormatrix (206) aus der Gruppe ausgewählt ist, bestehend aus Graphit, Siliziumkarbid, Aluminiumnitrid, rostfreiem Stahl und Kombinationen davon.

5. Reaktorkern (300) nach einem der Ansprüche 1 bis 4, wobei das Metallhydrid aus der Gruppe ausgewählt ist, bestehend aus Yttriumhydrid, Zerhydrid, Zirkoniumhydrid und Kombinationen davon.

6. Reaktorkern (300) nach einem der Ansprüche 1 bis 5, wobei der sekundäre Moderatorkanal (208) aus der Gruppe ausgewählt ist, bestehend aus Blöcken, Pellets, Stäben oder Platten und Kombinationen davon.

7. Reaktorkern (300) nach einem der Ansprüche 1 bis 6, wobei der sekundäre Moderatorkanal (208) konfiguriert ist, um den Brennstoffkanal (202), das Wärmerohr (204) und die primäre Moderatormatrix (206) vollständig zu umgeben.

8. Reaktorkern (500), umfassend:
eine erste Anordnung (530), umfassend:
eine erste Vielzahl von Brennstoffkanälen (502); und
eine erste Vielzahl von Wärmerohren (504), wobei die erste Anordnung (530) konfiguriert ist, um zwischen einem Brennstoffkanal (502) aus der ersten Vielzahl von Brennstoffkanälen und einem Wärmerohr (504) aus der ersten Vielzahl von Wärmerohren zu wechseln;
eine zweite Anordnung (550), umfassend:
eine zweite Vielzahl von Brennstoffkanälen (502); und
eine zweite Vielzahl von Wärmerohren (504), wobei die zweite Anordnung (550) konfiguriert ist, um zwischen einem Brennstoffkanal (502) aus der zweiten Vielzahl von Brennstoffkanälen und einem Wärmerohr (504) aus der zweiten Vielzahl von Wärmerohren zu wechseln;
eine dritte Anordnung (540), die zwischen der ersten Anordnung und der zweiten Anordnung positioniert ist, wobei die dritte Anordnung eine erste Vielzahl von Moderatorkanälen (508) umfasst, wobei jeder Moderatorkanal (508) aus der ersten Vielzahl von Moderatorkanälen aus Metallhydrid besteht; und
eine Moderatormatrix (206), wobei die erste Anordnung (530), die zweite Anordnung (550) und die dritte Anordnung (540) in die Moderatormatrix (206) eingebettet sind;
**dadurch gekennzeichnet, dass**
sich die erste Anordnung (530) um eine Mitte des Reaktorkerns (500) erstreckt, wobei der Reaktorkern (500) ferner ein monolithisches Kerngehäuse (522) umfasst, und wobei sich die erste Anordnung (530), die zweite Anordnung (550) und die dritte Anordnung (540) von der Mitte des Reaktorkerns (500) nach außen zu dem monolithischen Kerngehäuse (522) erstrecken.

9. Reaktorkern (500) nach Anspruch 8, ferner umfassend eine vierte Anordnung, umfassend eine zweite Vielzahl von Moderatorkanälen (508).

10. Reaktorkern (500) nach Anspruch 8 oder 9, ferner umfassend eine Steuertrommel (510), umfassend einen Neutronenreflektor (514) und einen Neutronenabsorber.

11. Reaktorkern (500) nach Anspruch 10, wobei die Steuertrommel (510) zwischen einer ersten Position und einer zweiten Position drehbar ist, wobei in der ersten Position der Neutronenabsorber der ersten Anordnung (530), der zweiten Anordnung (550) und der dritten Anordnung (540) zugewandt ist und wobei in der zweiten Position der Neutronenreflektor (514) der ersten Anordnung (530), der zweiten Anordnung (550) und der dritten Anordnung (540) zugewandt ist.

12. Reaktorkern (500) nach einem der Ansprüche 8 bis 11, wobei das Metallhydrid aus der Gruppe ausgewählt ist, bestehend aus Yttriumhydrid, Zerhydrid, Zirkoniumhydrid und Kombinationen davon.

13. Reaktorkern (500) nach einem der Ansprüche 8 bis 12, wobei die erste Vielzahl von Moderatorkanälen (508) aus der Gruppe ausgewählt ist, bestehend aus Blöcken, Pellets, Stäben oder Platten und Kombinationen davon.

14. Reaktorkern (500) nach einem der Ansprüche 8 bis 13, wobei die Moderatormatrix (206) aus der Gruppe ausgewählt ist, bestehend aus Graphit, Siliziumkarbid, Aluminiumnitrid, rostfreiem Stahl und Kombinationen davon.

## Revendications

1. Cœur de réacteur (300), comprenant :
un boîtier de cœur monolithique (302) ;
une pluralité de blocs de cœur de réacteur (200), dans lequel chaque bloc de cœur de réacteur (200) comprend :
un canal de combustible (202) ;
un caloduc (204) ;
une matrice de modérateur primaire (206) englobant le canal de combustible et le caloduc ; et
un canal de modérateur secondaire (208) conçu pour entourer au moins partiellement le canal de combustible (202), le caloduc (204) et la matrice de modérateur primaire (206), dans lequel le canal de modérateur secondaire (208) est constitué d'hydrure métallique ;
**caractérisé en ce que**
la pluralité de blocs de cœur de réacteur (200) s'étend radialement à partir d'un centre du boîtier de cœur monolithique (302) et,
la pluralité de blocs de cœur de réacteur (200) sont logés dans le boîtier de cœur monolithique (302).

2. Cœur de réacteur (300) selon la revendication 1, comprenant en outre un tambour de commande (310) comprenant un réflecteur de neutrons (314) et un absorbeur de neutrons (312).

3. Cœur de réacteur (300) selon la revendication 2, dans lequel le tambour de commande (310) peut pivoter entre une première position et une seconde position, dans lequel, dans la première position, l'absorbeur de neutrons (312) fait face à la pluralité de blocs de cœur de réacteur (200), et dans lequel, dans la seconde position, le réflecteur de neutrons (314) fait face à la pluralité de blocs de cœur de réacteur (200).

4. Cœur de réacteur (300) selon l'une quelconque des revendications 1 à 3, dans lequel la matrice de modérateur primaire (206) est choisie dans le groupe constitué de graphite, carbure de silicium, nitrure d'aluminium, acier inoxydable et des combinaisons de ceux-ci.

5. Cœur de réacteur (300) selon l'une quelconque des revendications 1 à 4, dans lequel l'hydrure métallique est choisi dans le groupe constitué d'hydrure d'yttrium, hydrure de cérium, hydrure de zirconium et des combinaisons de ceux-ci.

6. Cœur de réacteur (300) selon l'une quelconque des revendications 1 à 5, dans lequel le canal de modérateur secondaire (208) est choisi dans le groupe constitué de blocs, pastilles, barres ou plaques et des combinaisons de ceux-ci.

7. Cœur de réacteur (300) selon l'une quelconque des revendications 1 à 6, dans lequel le canal de modérateur secondaire (208) est conçu pour entourer complètement le canal de combustible (202), le caloduc (204) et la matrice de modérateur primaire (206).

8. Cœur de réacteur (500), comprenant :
un premier agencement (530), comprenant :
une première pluralité de canaux de combustible (502) ; et
une première pluralité de caloducs (504), dans lequel le premier agencement (530) est conçu pour alterner entre un canal de combustible (502) de la première pluralité de canaux de combustible et un caloduc (504) de la première pluralité de caloducs ;
un deuxième agencement (550), comprenant :
une seconde pluralité de canaux de combustible (502) ; et
une seconde pluralité de caloducs (504), dans lequel le deuxième agencement (550) est conçu pour alterner entre un canal de combustible (502) de la seconde pluralité de canaux de combustible et un caloduc (504) de la seconde pluralité de caloducs ;
un troisième agencement (540) positionné entre le premier agencement et le deuxième agencement, dans lequel le troisième agencement comprend une première pluralité de canaux de modérateur (508), dans lequel chaque canal de modérateur (508) de la première pluralité de canaux de modérateur est constitué d'hydrure métallique ; et
une matrice de modérateur (206), dans lequel le premier agencement (530), le deuxième agencement (550) et le troisième agencement (540) sont intégrés dans la matrice de modérateur (206) ;
**caractérisé en ce que**
le premier agencement (530) s'étend autour d'un centre du cœur de réacteur (500), dans lequel le cœur de réacteur (500) comprend en outre un boîtier de cœur monolithique (522), et dans lequel le premier agencement (530), le deuxième agencement (550) et le troisième agencement (540) s'étendent vers l'extérieur à partir du centre du cœur de réacteur (500) vers le boîtier de cœur monolithique (522).

9. Cœur de réacteur (500) selon la revendication 8, comprenant en outre un quatrième agencement comprenant une seconde pluralité de canaux de modérateur (508).

10. Cœur de réacteur (500) selon la revendication 8 ou 9, comprenant en outre un tambour de commande (510) comprenant un réflecteur de neutrons (514) et un absorbeur de neutrons.

11. Cœur de réacteur (500) selon la revendication 10, dans lequel le tambour de commande (510) peut pivoter entre une première position et une seconde position, dans lequel, dans la première position, l'absorbeur de neutrons fait face au premier agencement (530), au deuxième agencement (550) et au troisième agencement (540), et dans lequel, dans la seconde position, le réflecteur de neutrons (514) fait face au premier agencement (530), au deuxième agencement (550) et au troisième agencement (540).

12. Cœur de réacteur (500) selon l'une quelconque des revendications 8 à 11, dans lequel l'hydrure métallique est choisi dans le groupe constitué d'hydrure d'yttrium, hydrure de cérium, hydrure de zirconium et des combinaisons de ceux-ci.

13. Cœur de réacteur (500) selon l'une quelconque des revendications 8 à 12, dans lequel la première pluralité de canaux de modérateur (508) est choisie dans le groupe constitué de blocs, pastilles, barres ou plaques et des combinaisons de ceux-ci.

14. Cœur de réacteur (500) selon l'une quelconque des revendications 8 à 13, dans lequel la matrice de modérateur (206) est choisie dans le groupe constitué de graphite, carbure de silicium, nitrure d'aluminium, acier inoxydable et des combinaisons de ceux-ci.
